# FASCICULE DE BREVET EUROPEEN

(11) **EP 1 753 790 B1**
(45) Date de publication et mention de la délivrance du brevet: **11.05.2011**
(21) Numéro de dépôt: 05773481.6
(22) Date de dépôt: 17.05.2005
(51) Int. Cl.: C08F 8/14

(54) **UTILISATION DE GLYCEROL EN TANT QU'ADDITIF POUR ENCOLLAGES AQUEUX EXEMPTS DE FORMALDEHYDE**
VERWENDUNG VON GLYCERIN ALS ZUSATZ FÜR FORMALDEHYDFREIE WÄSSRIGE KLEBER
USE OF GLYCEROL AS AN ADDITIVE FOR AQUEOUS GLUES DEVOID OF FORMALDEHYDE

(30) Priorité: 17.05.2004 DE 102004024380
(43) Date de publication de la demande: 21.02.2007
(73) Titulaire: SAINT-GOBAIN ISOVER, 92400 Courbevoie (FR)
(72) Inventeur: ESPIARD, Philippe, F-60270 Gouvieux (FR); WAGNER, Eva, 67122 Altrip (DE)
(74) Mandataire: Jamet, Vincent
(86) Numéro de dépôt international: PCT/FR2005/001239
(87) Numéro de publication internationale: WO 2005/121191

(56) Documents cités:
- EP-A- 0 882 774
- EP-A- 0 990 727
- US-A- 5 318 990
- US-A- 5 763 524
- US-B1- 6 221 973

## Description

La présente invention se rapporte à des encollages aqueux, exempts de formaldéhyde, à base de polymères acryliques ou acrylates réticulés par un polyol pour la fabrication de laine minérale.

Pour fabriquer de la laine minérale, en particulier de roche et de verre, il est connu depuis longtemps d'appliquer un encollage à base de résine phénol formaldéhyde sur les fibres, de préférence dans une hotte après le fibrage, par exemple après l'étirage par soufflage tel que décrit dans DE 35 09 426 A1.

Dans ce procédé, une résine phénol formaldéhyde connue de la plupart des encollages de l'état de la technique est pulvérisée sur les fibres, de préférence en solution ou en dispersion aqueuse, et ladite résine commence à polymériser à la surface des fibres encore chaudes. Ensuite, les fibres individuelles sont connectées les unes aux autres sous l'effet de la polymérisation, notamment aux points de croisement, les fibres situées au sommet des points étant quasiment enrobées de gouttelettes de résine solidifiée ; par la suite, la mobilité des fibres individuelles les unes par rapport aux autres est limitée ou empêchée quand elles sont réticulées par de l'air chaud dans l'étuve.

Afin d'éviter les problèmes de pollution de l'environnement, il y a toujours de plus en plus d'essais qui sont menés pour remplacer les encollages traditionnels à base de résines phénoliques renfermant entre autres du formaldéhyde, par des encollages qui n'en contiennent pas.

Par exemple, dans EP 0 583 086 B2, il est décrit une composition d'encollage aqueux réticulable sans formaldéhyde pour fibres de verre à base de polymères polyacides ayant au moins deux groupes acides carboxyliques ou des groupes anhydrides, comprenant un polyol renfermant au moins deux groupes hydroxyles et un catalyseur contenant du phosphore, dans laquelle le rapport des groupes COOH aux groupes OH varie de 1 :0,01 à 1:3.

Dans EP 0 583 086 B2, le polyacide est par exemple un polyacide acrylique.

En tant que polyol, il est utilisé de préférence un β-hydroxyalkylamide, par exemple le [N,N-di(β-hydroxyéthyl)]-adipamide, cependant par exemple l'éthylène glycol, le glycérol, le pentaérythritol, le triméthylolpropane, le sorbitol, le sucrose, le glucose, le résorcinol, le catéchol, le pyrogallol, les urées glycolées, le 1,4-cyclohexanediol, la diéthanolamine, le triéthanolamine peuvent également être utilisés.

Des compositions d'encollage similaire pour des fibres minérales sont connues aussi de US 6 331 350 B1, EP 0 990 727 A1, EP 0 990 728 A1 et EP 0 990 729 A1. Cet état de la technique utilise un polyacide acrylique en tant que polyacide. Ici, les alkamolamines tout comme les glycols sont utilisés comme polyol.

EP 0 882/074 B1 décrit encore des compositions d'encollage pour des fibres minérales renfermant des polyacides acryliques et des glycols comme polyols.

De telles compositions pour fibres minérales sont disponibles commercialement sous la dénomination ACRODUR^{®} de BASF Aktiengesellshaft, Ludwigshafen.

Dans tous les documents cités de l'état de la technique, les polyols sont employés comme agents de réticulation puisque leurs groupes fonctionnels OH forment des liaisons esters avec les groupes COOH du polyacide.

Avant la réticulation, les résines polyacrylamides réticulées par un polyol, en particulier l'ACRODUR^{®}, ont des propriétés thermoplastiques. Après la réticulation thermique, ces propriétés se transforment en propriétés thermodurcissables s'accompagnant d'une augmentation considérable du module élastique. En d'autres termes, il existe un risque de fragilisation et de vieillissement des résines.

Quand une solution aqueuse d'une composition conventionnelle à base de résine polyacrylamide réticulée par un polyol est pulvérisée sur les fibres minérales, par exemple dans une hotte après le fibrage, des difficultés importantes surviennent après la réticulation, par exemple dans une étuve, pour que les produits fabriqués à base de laine minérale gardent un niveau de résistance au vieillissement ou une reprise en épaisseur ainsi qu'une flexion qui restent acceptables par l'utilisateur.

Ces difficultés proviennent entre autres du fait que les résines fondées sur une chimie différente de celle des résines phénoliques ont des mécanismes et des cinétiques de réaction modifiées qui ne correspondent pas aux conditions de fabrication habituelles de la laine minérale.

Le but de la présente invention est, partant de l'état de la technique selon EP 0 882 074 B1, de fournir un encollage aqueux exempt de formaldéhyde pour la fabrication de produits à base de laine minérale qui remédie aux inconvénients exposés plus haut.

Ce but est atteint grâce à l'encollage selon la présente revendication 1 qui possède en outre l'avantage d'améliorer la résistance au vieillissement des produits à base de laine minérale obtenus après réticulation de l'encollage.

L'usage du glycérol dans des compositions d'encollage à base de polymère acrylique ou de compositions d'encollage prêtes à l'emploi à base d'acrylate réticulé par un polyol a pour effet de retarder l'évaporation de l'eau. Par voie de conséquence, les mats de fibres bruts (feutres primitifs) ont un taux d'humidité plus élevé. Un taux d'humidité plus élevé dans les mats de fibres bruts prévient le dessèchement prématuré de l'encollage qui doit pénétrer dans l'étuve dans un état humide et collant afin de stabiliser les liaisons souhaitées entre les fibres.

En outre, les propriétés rhéologiques et de mouillage de l'encollage sont modifiées et ont un effet bénéfique sur la distribution de l'encollage sur les fibres minérales.

De manière surprenante, il a été trouvé que l'addition de glycérol dans un encollage à base de résine acrylique ou acrylate améliore de façon significative la résistance au vieillissement de produits à base de laine minérale. Les résultats d'essais menés au cours d'une étude pilote ont démontré que les caractéristiques de vieillissement après l'ajout de glycérol sont améliorées de 5 % pour la reprise en épaisseur et jusqu'à 40 % pour la flexion.

La présente invention concerne des encollages aqueux, exempts de formaldéhyde, à base de polymères acryliques ou acrylates réticulés par un polyol pour la fabrication de laine minérale et leur utilisation en vue d'améliorer la résistance au vieillissement de laine minérale obtenue après la réticulation de l'encollage.

A cet effet, il est préférable que le glycérol soit ajouté à l'encollage acrylique ou acrylate selon l'invention, c'est-à-dire à une solution prête à l'emploi, en une concentration d'environ 2 à 20 % en poids, en particulier 5 à 10 % en poids.

L'ajout de glycérol améliore ainsi la reprise en épaisseur d'au moins 5%, en particulier d'environ 10 %, et la flexion d'environ 10 à 40 %, plus particulièrement d'environ 30 %.

La reprise en épaisseur est une mesure de l'excès d'épaisseur que doit présenter le produit en laine minérale lors de la fabrication pour atteindre son épaisseur finale sur le lieu d'utilisation après l'élimination des forces de compression en prenant en considération la totalité des procédés de compression résultant de l'emballage, de stockage et de transport.

Par exemple, si un rouleau de laine minérale laminé pour l'isolation entre les chevrons de toiture doit avoir une épaisseur requise d'environ 140 mm, il doit être fabriqué avec une épaisseur significativement plus grande, par exemple d'environ 155 mm, afin de présenter l'épaisseur visée de 140 mm après déroulement sur le lieu de la pose. Le produit reprend pratiquement l'épaisseur qu'il avait à l'origine après sa fabrication. L'explication de cet effet est basé sur le fait que des propriétés élastiques sont conférées aux fibres pendant la fabrication, ces propriétés étant dues d'une part à un enchevêtrement purement mécanique des fibres et d'autre part aux additifs, tels que les encollages et leurs additifs, qui font que la laine réticulée peut être comprimée de manière relativement importante pour les besoins du transport, c'est-à-dire qu'elle est comprimée et qu'une certaine élasticité est ainsi perdue.

La présente invention présente ici un avantage particulier: l'excès d'épaisseur nécessaire dans le contexte de la reprise en épaisseur s'accompagne naturellement d'une masse plus importante de fibres dans le produit. D'un point de vue économique, sur la base d'une production de laine minérale de 60 000 à 90 000 tonnes par an un tel excès d'épaisseur se traduit par un nombre de tonnes considérables pour obtenir l'effet de « reprise en épaisseur ».

Les calculs effectués par les inventeurs ont montré que grâce à la modification de l'encollage acrylique par le glycérol, jusqu'à 4 % en poids de matière fibreuse peut être gagné pour une augmentation de la reprise en épaisseur de seulement 5 % en fonction de l'épaisseur brute du produit fabriqué. Pour une production moyenne de 75 000 tonnes par an, cela représente un gain annuel d'environ 3 000 tonnes de matériau.

Le polymère acrylique entrant dans la constitution de l'encollage peut être un polymère d'acide acrylique ou un copolymère d'acide acrylique et d'un autre monomère éthyléniquement insaturé, en particulier l'anhydride maléique.

Un encollage sans formaldéhyde qui s'est avéré particulièrement adapté contient un polymère obtenu par polymérisation radicalaire d'un acide dicarboxylique éthyléniquement insaturé, les groupes acides carboxyliques pouvant former un groupe anhydride, en une teneur consistant en 5 à 100 % en poids du polymère, une alcanolamine renfermant au moins deux groupes hydroxyles et moins de 1,5 % en poids d'un accélérateur contenant du phosphore par rapport au poids total de polymère et d'alcanolamine. De tels encollages sont par exemple disponibles sous la marque ACRODUR^{®} de la société BASF, Ludwigshafen.

D'autres avantages et caractéristiques de l'invention sont exposés dans les exemples et les dessins suivants.

Il est décrit :
Fig. 1 l'évolution du module d'élasticité en fonction de la température pour un encollage de référence à base de résine phénol formaldéhyde, un encollage acrylate sans ajout de glycérol est le même encollage acrylate avec différentes proportions de glycérol.
Fig. 2 le dispositif de test pour la mesure de la flexion.

### EXEMPLE 1

Il a été utilisé pour la préparation des encollages une résine acrylate disponible commercialement, dans le cas présent l'ACRODUR DS 3530 de la société BASF, Ludwigshafen, à laquelle ont été ajoutés une huile d'encollage et un silane (Tableau 1).

**Tableau 1 : composition des encollages.**

| | Encollage ACRODUR 100/0 | Encollage ACRODUR 95/5 | Encollage ACRODUR 90/10 |
|---|---|---|---|
| ACRODUR^{®} DS 3530 | 6,5 | 6,5 | 6,5 |
| Huile d'encollage | 0,5 | 0,5 | 0,5 |
| Silane | 0,03 | 0,03 | 0,03 |
| Glycérol | 0 | 0,3 | 0,6 |
| Eau | complément | complément | complément |

Les solutions d'encollage ont un pH égal à 3,3.

Les effets du glycérol sont expliqués ci-après.

### 1. Propriétés de l'encollage (propriétés d'élasticité)

Les mesures de la réactivité de l'encollage et des propriétés du liant sont effectuées par analyse mécanique dynamique [DMA] développée par la demanderesse, qui permet de déterminer le caractère viscoélastique d'un polymère.

Un papier filtre (Whatmann GF/C) est imprégné avec l'encollage et maintenu horizontalement entre des mors fixes. Une tête mobile permettant de mesurer la tension en fonction de la déformation est disposée à proximité de la face supérieure du papier filtre. A partir de ces mesures, on peut calculer le module d'élasticité.

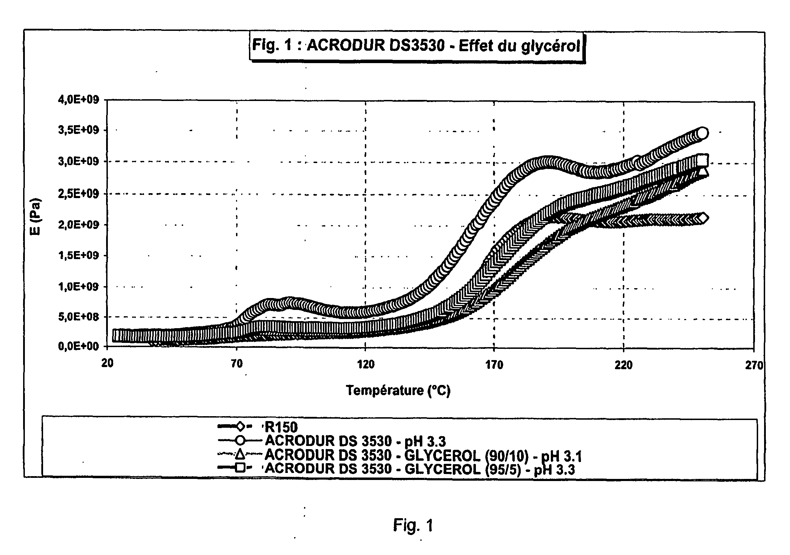

Le papier filtre imprégné est chauffé à 300°C, partant de 20°C à la vitesse de 5°C/min. Le module d'élasticité E (en Pa) en fonction de la température est donné dans la Fig. 1. La méthode de mesure est décrite en détail dans FR 0 304 750 publié le 16 Avril 2004 qui est ici incorporé par référence.

La méthode convient bien pour comparer les propriétés d'encollages viscoélastiques et thermoactifs avec celles de l'encollage conventionnel à base de résine phénol formaldéhyde utilisé dans l'industrie de la laine minérale. Cette comparaison est importante car le procédé de fabrication met en oeuvre des étuves dont les conditions sont adaptées pour la réticulation de la résine phénol formaldéhyde et ne permettent pas d'avoir des résultats fiables quand le profil des propriétés diffère considérablement de ces conditions ; d'un point de vue pratique, il est difficile d'optimiser la méthode pour ces conditions.

Comme on peut le voir sur la Fig. 1, la mesure du module d'élasticité des encollages réticulés examinés montre que l'addition de glycérol dans l'encollage acrylate [ACRODUR^{®} DS 3530 - glycérol (95/5)], sur la base des matières solides, tend à rapprocher les propriétés viscoélastiques de celles de la résine phénol formaldéhyde [résine R 150]. L'utilisation de 10 % de glycérol [ACRODUR^{®} DS 3530 - glycérol (90/10)] a un effet similaire alors que l'encollage acrylate - sans glycérol ajouté - [ACRODUR^{®} 3530] présente des propriétés élastiques qui varient considérablement par rapport à l'encollage phénol formaldéhyde classique.

L'analyse de la réticulation à l'aide du module d'élasticité faite à partir du Tableau 1 montre que l'ajout de glycérol permet d'adapter la viscosité et l'aptitude à la réticulation à celles de la résine phénolique.

### 2. Propriétés des produits à base de laine minérale.

Le test pratique sur une ligne de production a été limité à deux encollages sans glycérol et avec une teneur en glycérol ajouté de 5 %.

L'encollage a été pulvérisé, comme de coutume, dans une hotte sur les fibres encore chaudes avant le rassemblement des fibres.

Les propriétés des produits contenant ces deux types d'encollage ont été comparées à celles des produits encollés avec une résine phénol formaldéhyde traditionnelle.

### 2.1. Taux d'humidité sur les mats de fibres bruts.

Le taux d'humidité des mats de fibres bruts (Tableau 2) avant leur entrée dans l'étuve est augmenté par l'ajout de glycérol. Cette amélioration de l'humidité des mats de fibres bruts d'environ 15 % par l'ajout de 5 % de glycérol empêche le séchage prématuré de l'encollage, lequel doit entrer dans l'étuve à l'état humide et collant pour permettre de stabiliser les points de contact entre les fibres qui visent à fixer le déplacement et l'enchevêtrement des fibres dans un certain état mécanique.

**Tableau 2 : taux d'humidité des mats de fibres bruts.**

| Produit | Taux d'humidité du mat de fibres brut |
|---|---|
| ACRODUR^{®} sans glycérol | 8% |
| ACRODUR^{®} avec 5 % de glycérol | 15% |

### 2.2. Propriétés mécaniques.

L'ajout de glycérol a un effet positif sur les propriétés mécaniques, en particulier au regard du vieillissement. Les résultats des tests de vieillissement accéléré sont donnés dans le Tableau 3.

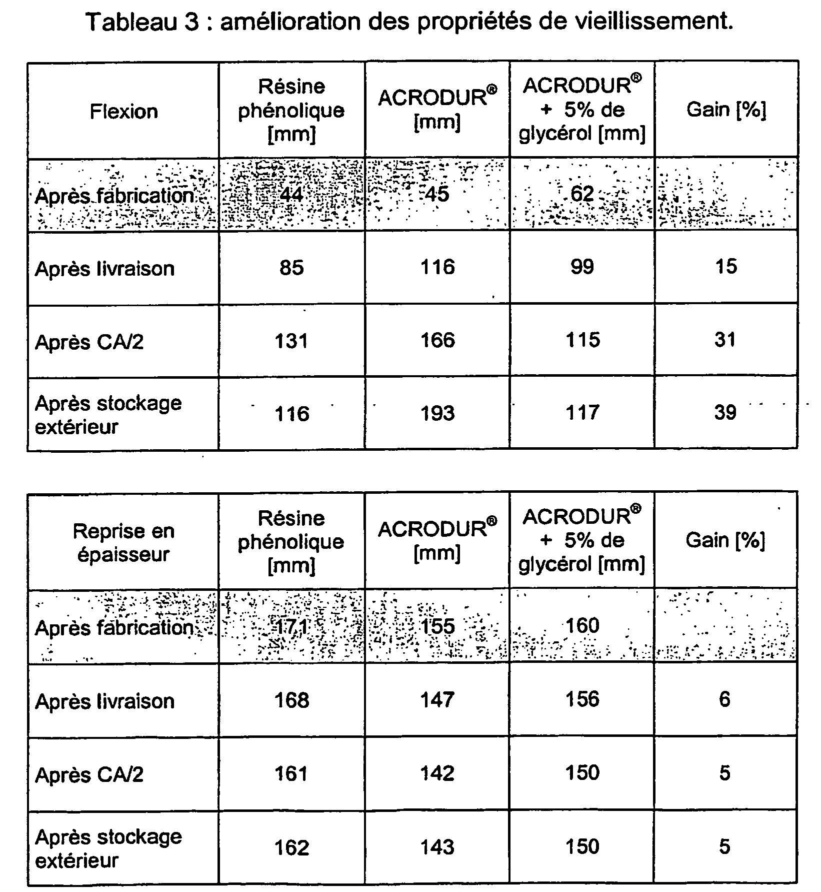

Dans le Tableau 3, les tests « CA/2 » et « Après stockage extérieur » sont mis en oeuvre de la manière suivante :
- CA/2 : les produits à base de laine minérale sont traités à une température de 35°C, sous une humidité relative de 95 % et un point de rosée de 34°C pendant 48 heures, puis on mesure la flexion et la reprise en épaisseur selon la norme DIN 18165-1 représentative des conditions de vieillissement.
- Stockage extérieur : les produits à base de laine minérale sont stockés à l'extérieur pendant 12 semaines avant de mesurer la flexion et la reprise en épaisseur.

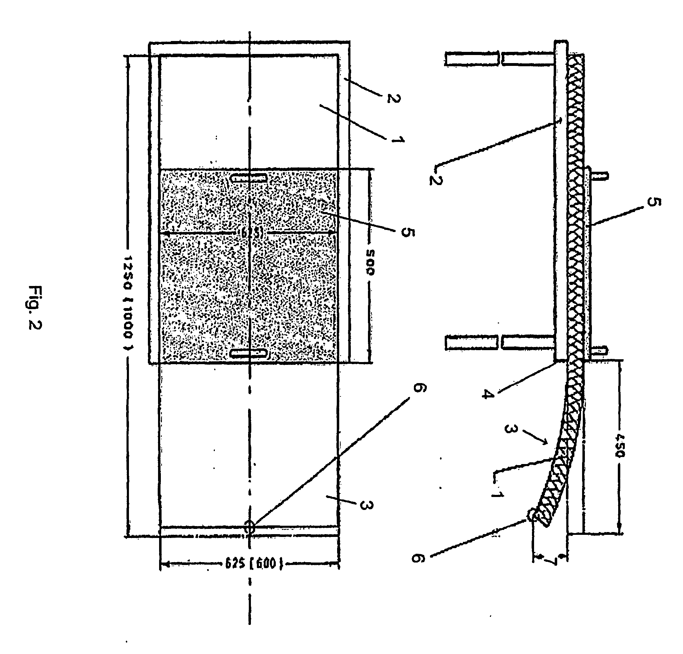

La mesure de la flexion est effectuée selon une méthode interne de la demanderesse exposée schématiquement sur la Fig. 2 dans laquelle la partie supérieure est une vue en coupe du dispositif de test approprié et la partie inférieure est une vue de dessus du dispositif.

Les panneaux sont testés à l'état livré (3 panneaux dans chaque cas) et les feutres sont testés sous forme d'échantillons de 1000 mm x ≤600 mm (selon la largeur du feutre, 1 à 2 échantillons par rouleau). Avant le test, les échantillons 1 sont prétraités pendant 48 heures sous atmosphère standard telle que définie dans la norme DIN 50014. Pour la mesure en flexion, les échantillons 1 sont placés sur la partie supérieure de la surface 2 de taille adaptée, à l'horizontale, de façon qu'une extrémité 3 s'étende librement au-delà du bord de la table 4 sur une longueur de 450 mm. Ensuite, une plaque de charge 5 est disposée sur l'échantillon de telle sorte que le bord avant de la plaque 5 affleure le bord de la surface 4, la plaque ayant une dimension de 625 mm x 500 mm et une masse de 6,25 kg dans le cas des panneaux, correspondant à une charge de 0,2 kN/m², et une dimension identique et une masse de 3,125 kg dans le cas des feutres, correspondant à une charge de 0,1 kN/m². Sur chaque échantillon 1, 4 mesures sont effectuées au centre de l'échantillon 6, sur les faces supérieure et inférieure, puis l'échantillon est retourné de 180° selon l'axe vertical et analysé à nouveau comme indiqué. La valeur moyenne des 4 mesures représente la flexion 7 (en mm).

Le terme ACRODUR^{®} utilisé dans les Tableaux 1 et 3 désigne un encollage acrylate de la société BASF, Ludwigshafen, disponible commercialement sous la référence ACRODUR^{®} 3530. A l'évidence, l'homme du métier sait que tous les encollages aqueux exempts de formaldéhyde basés sur un acrylate réticulé par un polyol peuvent être utilisés dans le cadre de la présente invention.

Comme on peut le voir à partir du Tableau 3, les valeurs de la flexion pour l'ACRODUR^{®} sont améliorées de 15 à 39 % par rapport à l'encollage acrylate sans addition de glycérol.

On peut encore constater que la flexion pour un liant acrylate avec ajout de 5 % de glycérol est dans tous les cas égale à celle de l'encollage traditionnel à base de résine phénol formaldéhyde (Tableau 3, flexion après stockage extérieur) voire supérieure dans certains cas (Tableau 3, flexion pour CA/2).

En outre, un avantage spécifique réside dans le fait que le classement du matériau de construction (comportement au feu) selon la norme DIN EN 13501, partie 1, n'est pas inférieur au produit avec un encollage à base de résine phénol formaldéhyde conventionnelle.

Concernant la deuxième propriété « reprise en épaisseur » figurant dans le Tableau 3, et qui n'est pas dépendante du vieillissement, on peut dire que les valeurs de reprise en épaisseur pour l'encollage acrylate avec addition de 5 % de glycérol sont légèrement inférieures aux valeurs des produits à base de laine minérale liés avec une résine phénolique. Par rapport à l'encollage acrylate ACRODUR^{®} sans glycérol, les valeurs de la reprise en épaisseur sont toutefois améliorées de 5 à 6 %. Ceci représente une économie considérable en terme de matériau fibreux comme cela a déjà été décrit dans la présente invention.

## Revendications

1. Encollage aqueux, exempt de formaldéhyde,
à base de polymère acrylique ou acrylate,
pour laine minérale, **caractérisé en ce qu'**il comprend :
- un polymère obtenu par polymérisation radicalaire d'un acide dicarboxylique éthyléniquement insaturé, en une teneur consistant en 5 à 100 % en poids du polymère,
- une alcanolamine renfermant au moins deux groupes hydroxyles,
- moins de 1,5 % en poids d'un accélérateur contenant du phosphore par rapport au poids total de polymère et d'alcanolamine, et
- du glycérol.

2. Encollage selon la revendication 1, **caractérisé en ce que** les groupes acides carboxyliques de l'acide dicarboxylique éthyléniquement insaturé forment un groupe anhydride.

3. Encollage selon la revendication 1 ou 2, **caractérisé en ce que** la quantité de glycérol est d'environ 2 à 20 % en poids de l'encollage, de préférence 5 à 10%.

4. Encollage selon l'une des revendications 1 à 3, **caractérisé en ce qu'**il comprend en outre une huile et un silane.

5. Produit isolant à base de laine minérale, **caractérisé en ce que** la laine minérale est encollée avec un encollage selon l'une des revendications 1 à 4.

6. Utilisation de l'encollage aqueux selon la revendication 1 pour améliorer la résistance au vieillissement de produits à base de laine minérale obtenus après la réticulation de l'encollage.

## Claims

1. Aqueous, formaldehyde-free, binder on the basis of acrylic or acrylate polymer, for mineral wool, **characterized in that** it comprises:
- a polymer obtained by radical polymerization of an ethylenically unsaturated dicarboxylic acid in an amount consisting of 5 to 100% by weight of the polymer;
- an alkanolamine containing at least two hydroxyl groups;
- less than 1.5% by weight of a phosphorus-containing accelerator relative to the total weight of polymer and alkanolamine; and
- glycerol.

2. Binder according to Claim 1, **characterized in that** the carboxylic acid groups of the ethylenically unsaturated dicarboxylic acid form an anhydride group.

3. Binder according to Claim 1 or 2, **characterized in that** the amount of glycerol is about 2 to 20%, preferably 5 to 10%, by weight of the binder.

4. Binder according to one of Claims 1 to 3, **characterized in that** it furthermore includes an oil and a silane.

5. Insulation product based on mineral wool, **characterized in that** the mineral wool is bound with a binder according to one of Claims 1 to 4.

6. Use of the aqueous binder according to claim 1 for the enhancement of the ageing resistance of mineral wool products obtained after the curing of the binder.

## Patentansprüche

1. Formaldehydfreies, wässriges Bindemittel (encollage) auf Basis von Acrylic oder Acrylatpolymer, für Mineralwolle, **dadurch gekennzeichnet, dass** es enthält:
- ein Polymer, erhalten durch radikalische Polymerisation einer ethylenischen ungesättigten Dicarbonsäure mit einem Gehalt von 5 bis 100 Gew.-%, bezogen auf das Polymer,
- ein Alkanolamin, welches wenigstens zwei Hydroxylgruppen enthält,
- weniger als 1,5 Gew.-%, bezogen auf das Gesamtgewicht von Polymer und Alkanolamin, eines phosphorhaltigen Beschleunigers, und
- Glyzerin.

2. Bindemittel nach Anspruch 1, **dadurch gekennzeichnet, dass** die Carbonsäuregruppen der ethylenischen ungesättigten Dicarbonsäure eine Anhydridgruppe bilden.

3. Bindemittel nach Anspruch 1 oder 2, **dadurch gekennzeichnet, dass** der Glycerinanteil etwa 2 bis 20 Gew.-%, bezogen auf das Bindemittel, vorzugsweise 5 bis 10 %, beträgt.

4. Bindemittel nach einem der Ansprüche 1 bis 3, **dadurch gekennzeichnet, dass** es ferner ein Öl sowie ein Silan enthält.

5. Dämmstoff auf Mineralwollebasis, **dadurch gekennzeichnet, dass** die Mineralwolle mit einem Bindemittel gemäß einem der Ansprüche 1 bis 4 gebunden ist.

6. Verwendung von wäßrige Bindemittel nach Anspruch 1, zur Erhöhung der Alterungsbeständigkeit der nach Aushärtung des Bindemittels erhaltenen Mineratwolleprodukte.
